# EUROPÄISCHE PATENTANMELDUNG

(11) **EP 0 547 428 A1**
(43) Veröffentlichungstag der Anmeldung: **23.06.1993**
(21) Anmeldenummer: 92120524.1
(22) Anmeldetag: 02.12.1992
(51) Int. Cl.: B65G 67/02

(54) **Rammbalken für andockende Fahrzeuge**

(30) Priorität: 16.12.1991 DE 4141443
(71) Anmelder: Alten, Kurt, D-30974 Wennigsen (DE)
(72) Erfinder: Alten, Kurt, D-30974 Wennigsen (DE)
(74) Vertreter: Depmeyer, Lothar

(57) **Zusammenfassung**

Die Erfindung geht aus von einem Rammbalken (8,21) für andockende Fahrzeuge, der höhenverstellbar und an den Enden von senkrechten Führungsmitteln (18) gehalten ist. Um Schäden bei schräg auf den Rammbalken (8,21) einwirkenden Kräfte beim Andocken von Fahrzeugen auszuschliessen, sind aufgrund der Erfindung die Führungsmittel (18) oberhalb und unterhalb des Rammbalkens (8,21) gehalterte,straffe Seile (18), deren Halterung elastisch (19,20) nachgiebig sein kann.

## Beschreibung

Die Erfindung betrifft einen Waagerechten, höhenverstellbaren Rammbalken für vor Rampen und Gebäudeöffnungen andockende Fahrzeuge mit senkrechten Führungsmitteln für die Balkenenden.

Derartige Rammbalken sollen verhindern, dass andockende, mit dem Heck an Rampen und Gebäude herangeführte Fahrzeuge an den Gebäuden bzw. den Rampen und deren dort installierten Hilfseinrichtungen z.B. Überfahrbrücken oder Dichtungsschürzen Schaden anrichten können, ausgehend von der Erkenntnis, dass die Fahrer der Fahrzeuge ihre Fahrzeuge zunächst so weit heranführen, dass ein Kontakt zum Gebäude bzw. zur Rampe stattfindet. Wenn dieser Kontakt stattgefunden hat, werden die Fahrzeuge um einige Zentimeter vom Gebäude bzw. von der Rampe abgezogen, um so die günstigste Fahrzeugstellung herbeizuführen. Die Rammbalken sollen dementsprechend die erste Kontaktnahme im erwähnten Sinne ermöglichen und dann nach unten bewegt werden können, um den Ladebetrieb ungehindert durchführen zu können.

Es versteht sich, dass die Fahrzeuge nicht immer rechtwinkelig zum Gebäude bzw. zur Rampe herangeführt werden und sich hieraus im Bereich des Rammbalkens Querkräfte ergeben können, die bei den bekannten Balkenanordnungen zu Beschädigungen an den Lagerstellen der Balkenenden führen, wenn die Balkenenden insb. in senkrechten, starren Führungen angeordnet sind.
Der Erfindung liegt die Aufgabe zugrunde, diese Nachteile zu beseitigen und demgemäss zu erreichen, dass bei vom Fahrzeug ausgeübten Schrägkräften Beschädigungen nicht eintreten können.

Zur Lösung dieser Aufgabe sind erfindungsgemäss die senkrechten Führungen für die Balkenenden oberhalb und unterhalb des Rammbalkens gehalterte, gespannte Seile, die vorzugsweise entweder über eine gewisse Längselastizität verfügen oder elastisch nachgiebige Halterungen aufweisen, sodass die beidseitig vorgesehenen, also an jedem Balkenende angeordneten Seile den Rammbalken nicht nur senkrecht führen können, sondern auch in der Lage sind, dem Rammbalken gewisse Seitenbewegungen und somit Längs bewegungen zu gestatten. Dabei sind elastische Seile bzw. federnd gehaltene Seile kein unbedingtes Erfordernis, weil auch in Längsrichtung starre Seile geringe Lateralbewegungen zulassen, also kleine Längsbewegungen des Rammbalkens ermöglichen können.
Zweckmässigerweise wird die Lagerung der Balkenenden mit Hilfe der senkrechten Seile auch so ausgeführt, dass die Rammbalken im nicht beaufschlagten Zustand einen geringen Abstand haben zum Gebäude bzw. zur Rampe. Erfolgt dann eine Beaufschlagung des Rammbalkens, so weichen die Seile aus, und der Rammbalken kann sich so an ein festes Widerlager z.B. an der Rampe oder dem Gebäude anlegen, während eine gewollte Höhenverstellung des Rammbalkens ohne Schwierigkeiten durch Verstellen von Hand durchgeführt werden kann.

Weitere Einzelheiten der Erfindung werden anhand der Zeichnung erläutert, in der ein Ausführungsbeispiel der Erfindung dargestellt ist. Es zeigen :
- Fig. 1: eine Teilansicht eines Lagerhauses mit einem im Bereich einer Gebäudeöffnung befindlichen Rammbalken in der oberen Endstellung,
- Fig. 2: einen Schnitt nach der Linie II - II von Fig. 1,
- Fig. 3: einen Aussschnitt aus Fig. 1 in vergrösserter Darstellung und
- Fig. 4: einen Schnitt nach der Linie IV - IV von Fig. 3.

Die Gebäudeöffnung, über die ein Be- und Entladen eines vor dem Lagerhaus 1 andockenden Fahrzeuges erfolgen soll, ist mit 2 bezeichnet. Die Bodenfläche des Lagerhauses 1 hat das Bezugszeichen 3. Zum Be- und Entladen dient eine in Richtung des Pfeiles 4 ausfahrbare und im Sinne des Pfeiles 5 verschwenkbare Überfahrbrücke 6 mit Verlängerung 7, die auf die Plattform des Fahrzeugen aufgelegt wird.

Damit das Heck des Fahrzeuges möglichst nahe an das Lagerhaus 1 herangeführt werden kann, jedoch Beschädigungen ausgeschlossen sind, ggfs. zunächst eine Kontaktnahme mit dem Lagerhaus 1 nicht zu Beschädigungen führt, ist ein waagerecht angeordneter, aus einem Doppel-T-Träger bestehender, heb- und senkbarer Rammbalken 8 im Bereich der Gebäudeöffnung 2 vorgesehen, und zwar im unteren Bereich derart, dass dort das Lagerhaus 1 bzw. die Überfahrbrücke 6 und evtl. weiterhin vorhandene Einrichtungen geschützt sind.

Die Balkenenden 9 befinden sich vor den Rändern der Gebäudeöffnung 2, die zur Aufnahme von fest angeordneten, als Widerlager für den Rammbalken 8 und als Halterung wirkende schmale Platten 1o dienen, wobei sich auf jeder Seite der Gebäudeöffnung 2 eine Platte 1o befindet. Oben und unten weisen die Platten 1o eine abstehende Lasche 11, 12 auf.

An der Oberseite der Balkenenden 9 ist eine Rolle 13 für ein Tragseil 14 gelagert, das mit seinem einen Ende an der Lasche 11 verankert ist und an seinem anderen Ende ein Gegengewicht 15 trägt, wobei die Seilumlenkung über eine oben gelegene weitere Rolle 16 erfolgt.

Der Steg des Rammbalkens 9 wird von einer Hülse 17 durchsetzt, durch die ein straff gespanntes, senkrecht verlaufendes Seil 18 geführt ist. Unten ist dieses Seil 18 mitder Lasche 12 und oben mit der Lasche 11 verbunden. Während die untere Seilbefestigung starr ist, erfolgt die obere Seilbefestigung über einen längsverschiebbar an der Lasche 11 gelagerten Bolzen 19, der unter der Wirkung einer Druckfeder 2o steht. Diese Feder ist so angeordnet und beschaffen, dass sie stets danach trachtet, das Seil 18 gespannt zu halten; allerdings kann sich der Bolzen 19 auch gegen die Federwirkung geringfügig nach unten bewegen.

Vorne ist der Rammbalken 8 mit einem elastischen Gummianschlagprofil 21 versehen.

Das Seil 18 hat zudem zwei verstellbare Anschläge 22 für die Balkenenden 9. Ausserdem ist das Seil 18 so angeordnet, dass sich der Rammbalken 8 im nicht beaufschlagten Zustand mit den Balkenenden 9 mit geringem Abstand x vor der Platte 1o befindet, um so den Rammbalken 8 frei nach oben bzw. unten bewegen zu können. Vgl. den Doppelpfeil 23.

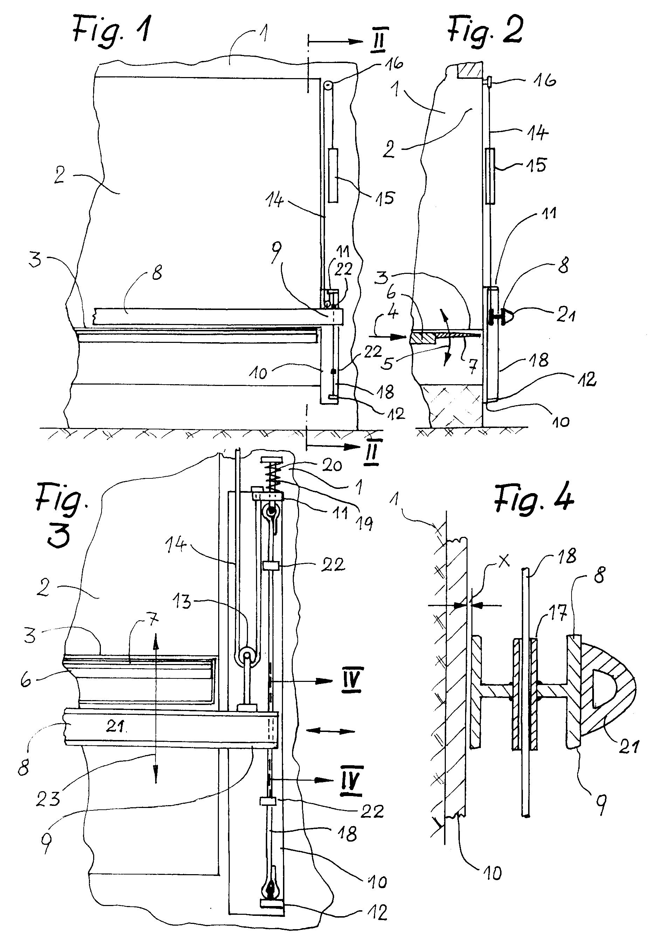

Zur Handhabung und Wirkungsweise des Rammbalkens 8 wird auf folgendes verwiesen :
Das Gegengewicht 15 ist so bemessen, dass es bestrebt ist, den Rammbalken 8 gegen den oberen Anschlag 22 zu ziehen. Diese Normalstellung oder Ruhestellung des Rammbalkens 8 ist in Fig. 1 und 2 dargestellt. Soll nun ein Fahrzeug andocken, so wird es so weit zurückgesetzt, dass es eben den Rammbalken 8 beaufschlagt, wobei er unter Überwindung des Abstandes x an der Platte 1o ein festes Widerlager findet. Nunmehr wird das Fahrzeug um ein geringes Mass nach vorne bewegt, wobei es vom Rammbalken 8 freikommt. Jetzt kann der Rammbalken 8 z.B. durch Beaufschlagen mit dem Fuss ( durch die Bedienungsperson)nach unten bewegt werden, um die am Fahrzeugheck befindlichen Türen öffnen zu können. Nunmehr kann sich der Rammbalken 8 von unten an die geöffneten Türen anlegen oder an die Unterseite der ausgefahrenen Überfahrbrücke 6, wenn sie in Stellung gebracht ist. Diese Verfahrbewegungen des Rammbalkens 8 sind ohne weiteres möglich, weil er sich im Abstand x vor der Platte 1o befindet und die Wirkung des Gegengewichtes 15 leicht überwunden werden kann. Wenn das Fahrzeug abgezogen ist, hebt sich der Rammbalken8 bis zum Anschlag 22. Im übrigen zeigt Fig. 3 eine abgesenkte Stellung des Rammbalkens 8; oberhalb dieses Balkens ist die Stirnseite der Überfahrbrücke 6 zu erkennen, die also frei ausfahrbar ist.

Von besonderer Bedeutung ist, dass die Seile 18 unter der Wirkung von Schrägkräften zur Seite hin ausweichen können ( Bewegungen in Richtung des Rammbalkens ). Diese Querbewegung ist auch durch die Verschiebebewegung des Bolzens 19 in gesteigertem Umfang möglich. Die Druckfeder 2o sorgt dabei immer für die notwendige Straffung der beiden Seile 18. Anstelle eines in Längsrichtung starren Seiles kann auch ein seilartiges Gebilde mit elastischer Längsdehnung z.B. eine stramm gewickelte Zugfeder oder ein Gummiseil benutzt werden. In jedem Falle muss aber sichergestellt sein, dass in Längsrichtung des Rammbalkens wirkende Kräfte nicht zum Bruch dieses Gebildes führen.

## Patentansprüche

1. Waagerechter, höhenveränderbarer Rammbalken für vor Rampen und Toröffnungen andockende Fahrzeuge mit senkrechten Führungsmitteln für die Balkenenden, dadurch gekennzeichnet, dass die Führungsmittel oberhalb und unterhalb des Rammbalkens (8) gehalterte, gespannte Seile (18) sind.

2. Balken nach Anspruch 1, dadurch gekennzeichnet, dass die Seile (18) unter der Wirkung einer sie straffenden Feder (2o) stehen.

3. Balken nach Anspruch 2, dadurch gekennzeichnet, dass zumindest ein Ende der Seile (18) an einem längsverschiebbaren Bolzen (19) befestigt ist, der von einer Druckfeder (2o) umschlossen ist.

4. Balken nach Anspruch 1, dadurch gekennzeichnet, dass an den Seilen (18) Anschläge (22) für den Rammbalken (8) befestigt sind, die im Abstand von den Befestigungsstellen der Seilenden angeordnet sind.

5. Balken nach Anspruch 1, dadurch gekennzeichnet, dass der Rammbalken (8) durch an seinen Enden angreifende Seile (14) aufgehängt ist, die den Rammbalken (8) in seiner oberen Endstellung halten, und dass die den Balken haltende Rückstellkraft zum Bewegen des Rammbalkens (8) nach unten von der Bedienungsperson durch Fuss- oder Handbetätigung überwindbar ist.

6. Balken nach Anspruch 1, dadurch gekennzeichnet, dass er im Ruhezustand im geringen Abstand (x) von einem Widerlager (1o) angeordnet ist und dass sich der Rammbalken bei Beaufschlagung durch ein Fahrzeug gegen sein Widerlager anlegt.

7. Balken nach Anspruch 1, dadurch gekennzeichnet, dass er mit einer Führungshülse (17) zur Aufnahme des Seiles (18) versehen ist.

8. Balken nach Anspruch 1, 3 und 6, dadurch gekennzeichnet, dass das Widerlager (1o) zur Halterung der Seilenden dient.
